# FASCICULE DE BREVET EUROPEEN

(11) **EP 2 554 822 B1**
(45) Date de publication et mention de la délivrance du brevet: **02.09.2015**
(21) Numéro de dépôt: 12305930.5
(22) Date de dépôt: 30.07.2012
(51) Int. Cl.: F02C 7/04, F01D 21/04, B64D 33/02, F01D 25/24

(54) **Dispositif de liaison plus particulièrement adapté pour assurer la liaison entre une entrée d'air et une motorisation d'une nacelle d'aéronef**
Speziell angepasste Verbindungsvorrichtung zur Sicherstellung der Verbindung zwischen einem Lufteinlass und der Motorisierung einer Luftfahrzeuggondel
Linking device more specifically suited to providing the link between an air intake and an engine of an aircraft nacelle

(30) Priorité: 05.08.2011 FR 1157202
(43) Date de publication de la demande: 06.02.2013
(73) Titulaire: Airbus Opérations SAS, 31060 Toulouse (FR)
(72) Inventeur: Porte, Alain, 31770 Colomiers (FR); Dida, Stéphane, 31470 Fontenilles (FR); Fargues, Matthieu, 82000 Montauban (FR); Marro, Martial, 31830 Plaisance Du Touch (FR); Chancerelle, Emeric, 31200 Toulouse (FR)
(74) Mandataire: Fantin, Laurent

(56) Documents cités:
- EP-A1- 1 277 919
- FR-A1- 2 936 223
- GB-A- 2 010 434

## Description

La présente invention se rapporte à une nacelle d'aéronef avec un dispositif de liaison entre une entrée d'air et une motorisation amélioré.

EP 12 77919 A1 est considéré l'état de la technique le plus proche.

Un ensemble propulsif d'aéronef comprend une nacelle dans laquelle est disposée de manière sensiblement concentrique une motorisation reliée par l'intermédiaire d'un mât au reste de l'aéronef.

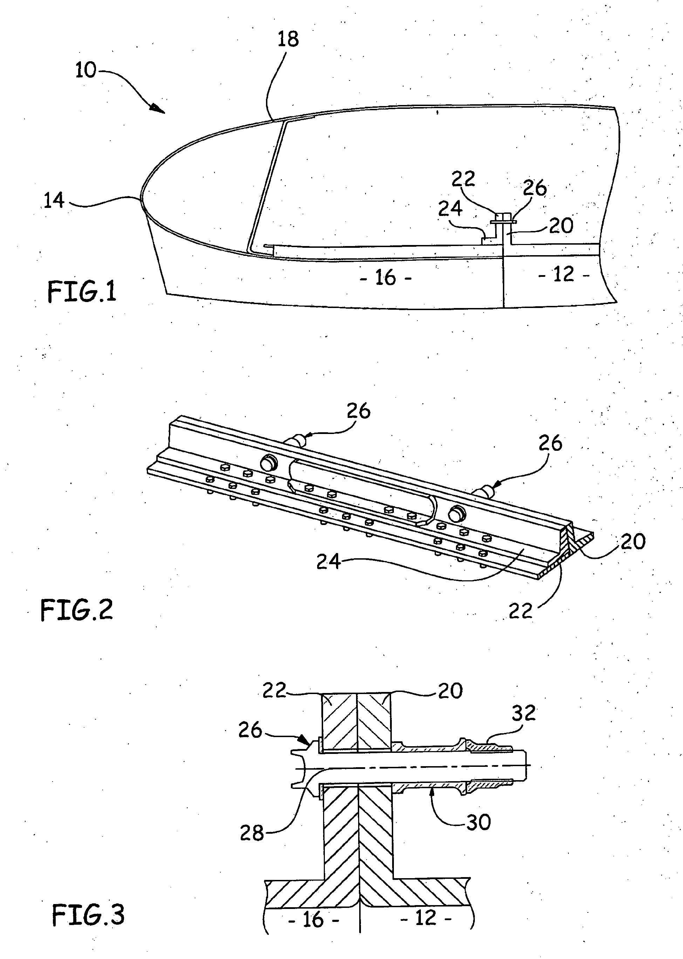

Comme illustré sur la figure 1, la nacelle comprend à l'avant une entrée d'air 10 permettant de canaliser un flux d'air en direction de la motorisation 12.

L'entrée d'air 10 comprend une lèvre 14 dont la surface en contact avec les flux aérodynamiques est prolongée à l'intérieur de la nacelle par un conduit intérieur 16 de sections sensiblement circulaires et à l'extérieur de la nacelle par une paroi extérieure 18 de sections sensiblement circulaires.

L'entrée d'air 10 est reliée à la motorisation 12 par un dispositif de liaison illustré en détails sur les figures 2 et 3. Ce dispositif de liaison comprend au niveau de la motorisation une première collerette annulaire 20 solidarisée à une seconde collerette annulaire 22 d'un panneau délimitant le conduit 16 ou d'une pièce intercalaire 24, appelée bride, reliée au panneau délimitant le conduit 16, comme illustré sur la figure 2. Les deux collerettes 20 et 22 sont plaquées l'une contre l'autre et maintenues ainsi par des éléments de liaison 26, par exemple des boulons ou des rivets, qui traversent les collerettes 20, 22 et s'étendent parallèlement à l'axe longitudinal de la nacelle.

Selon un mode de réalisation illustré sur la figure 3, les boulons ou rivets 26 comprennent une tige 28 dont le diamètre est inférieur ou égal à celui des trous de passage ménagés dans les collerettes annulaires 20 et 22.

Le dispositif de liaison et plus particulièrement les boulons ou rivets 26 sont dimensionnés pour assurer la transmission des efforts entre l'entrée d'air et la motorisation et pallier aux éventuels risques d'incidents, comme par exemple le bris d'une pale de la soufflante.

Lorsqu'une pale de la soufflante de la motorisation se brise, le conduit de la motorisation peut se déformer sur toute ou une partie de sa périphérie. Les déformations du conduit de la motorisation tendent à se propager en direction du conduit 16 de l'entrée d'air. Par conséquent, il est nécessaire de tenir compte de ces éventuelles déformations lors de la conception du conduit 16 de l'entrée d'air qui est généralement en matériau composite et intègre un système de traitement acoustique.

Pour limiter la propagation des déformations de la collerette annulaire 20 de la motorisation vers la collerette 22 de l'entrée d'air, il est possible de prévoir un filtre au niveau des éléments de liaison 26. Pour chaque dispositif de liaison, ce filtre comprend au moins un fourreau déformable 30 enfilé sur la tige 28 de l'élément de liaison 26. Selon l'exemple illustré sur la figure 3, le fourreau déformable 30 est intercalé entre la collerette annulaire 20 reliée à la motorisation et un écrou 32 de l'élément de liaison 26. Ce fourreau déformable 30 a un diamètre intérieur ajusté à celui de la tige 28 et comprend en partie centrale une épaisseur relativement faible de manière à pouvoir se déformer, notamment par flambage. Grâce à sa déformation, le fourreau 30 autorise un mouvement relatif entre les deux collerettes annulaires. Ce mouvement relatif est limité et essentiellement orienté selon la direction axiale.

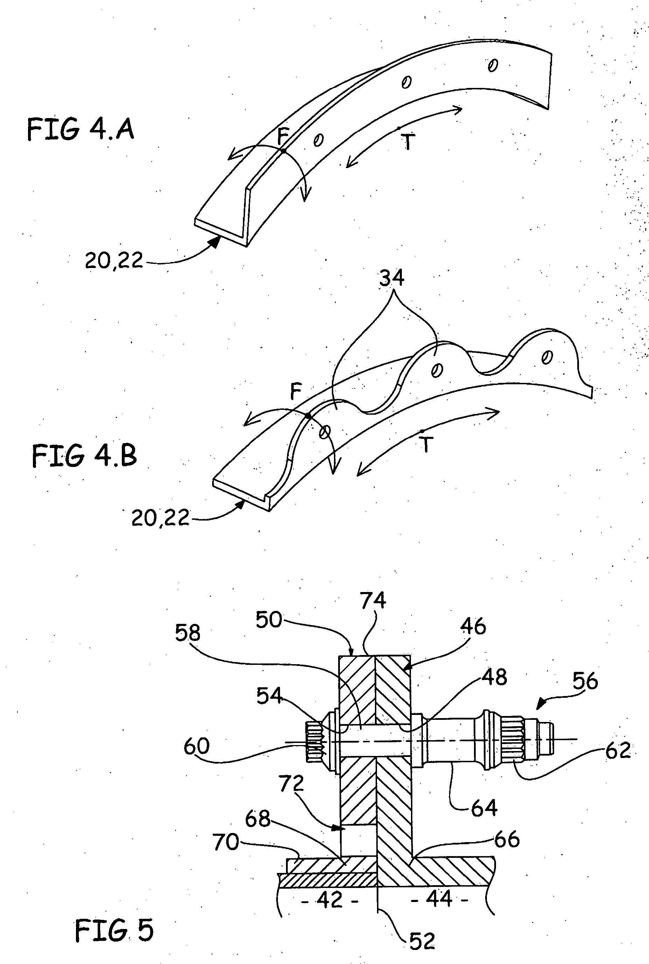

Selon un mode de réalisation illustré sur la figure 4A, la collerette annulaire 20 ou 22 peut avoir une section en L sensiblement constante sur la périphérie. Ce profil de collerette offre une grande résistance à la torsion selon l'axe longitudinal de la nacelle comme illustré par la double flèche T ainsi qu'une grande résistance à la flexion selon un axe tangent au conduit 16 et perpendiculaire à l'axe longitudinal comme illustré par la double flèche F.

Par conséquent, ce type de profil de collerette est rigide et ne tend pas à absorber par déformations une partie de l'énergie en cas de bris de pale.

Dans d'autres applications, lorsque deux conduits sont reliés bout à bout grâce à des collerettes annulaires, au moins une des collerettes annulaires peut comprendre dans le plan perpendiculaire à l'axe longitudinal des lobes 34 distants les uns des autres dans lesquels sont réalisés les trous de passage destinés aux éléments de liaison, comme illustré sur la figure 4B. Même si ce type de profil de collerette peut se déformer plus aisément que celui de la figure 4A et offrir un mouvement relatif entre les deux conduits plus important qu'en utilisant un fourreau 30 déformable, il offre une résistance à la torsion T nettement inférieure à celle procurée par le profil de la figure 4A. Or, dans le cas d'un dispositif de liaison entre une entrée d'air et une motorisation d'une nacelle d'aéronef, les collerettes doivent offrir une résistance à la torsion élevée.

Aussi, la présente invention vise à proposer un dispositif de liaison plus particulièrement adapté pour relier une motorisation et une entrée d'air d'une nacelle d'aéronef susceptible d'absorber par déformation une partie de l'énergie en cas de bris de pale, tout en conservant une résistance à la torsion élevée.

A cet effet, l'invention a pour objet une nacelle d'aéronef avec un dispositif de liaison entre un premier conduit d'une entrée d'air et un second conduit d'une motorisation, les deux conduits étant disposés bout à bout, ledit dispositif de liaison comportant une collerette annulaire reliée à l'entrée d'air, une collerette annulaire reliée à la motorisation plaquée contre la collerette annulaire de l'entrée d'air, lesdites collerettes s'étendant dans un plan perpendiculaire à l'axe longitudinal de la nacelle, une pluralité de trous de passage ménagés dans les collerettes annulaires et disposés au droit les uns des autres et des éléments de liaison logés dans les trous de passage, permettant de relier lesdites collerettes annulaires, caractérisée en ce qu'au moins une collerette comprend au moins une lumière intercalée entre un trou de passage et la zone de jonction de la collerette et/ou entre un trou de passage et le bord extérieur de la collerette.

Cette solution permet d'absorber par déformation une partie de l'énergie en cas de bris de pale essentiellement selon une direction radiale.

D'autres caractéristiques et avantages ressortiront de la description qui va suivre de l'invention, description donnée à titre d'exemple uniquement, en regard des dessins annexés sur lesquels :
- la figure 1 est une coupe schématique selon un plan radial d'une partie de l'avant d'une nacelle d'aéronef,
- la figure 2 est une vue en perspective illustrant une partie d'une liaison entre un moteur et une entrée d'air d'une nacelle d'aéronef selon l'art antérieur,
- la figure 3 est une coupe illustrant un élément de liaison entre un moteur et une entrée d'air d'une nacelle d'aéronef selon un premier mode de réalisation de l'art antérieur,
- la figure 4A est une vue en perspective d'une partie d'une collerette selon une première variante de l'art antérieur,
- la figure 4B est une vue en perspective d'une partie d'une collerette selon une autre variante de l'art antérieur,
- la figure 5 est une coupe illustrant un dispositif de liaison entre un moteur et une entrée d'air d'une nacelle d'aéronef selon un premier mode de réalisation de l'invention,
- la figure 6 est une vue de face de la collerette de l'entrée d'air illustrée sur la figure 5,
- la figure 7 est une vue en perspective d'une partie de la collerette illustrée sur la figure 6,
- la figure 8 est une vue de face d'une partie d'une collerette selon une autre variante de l'invention,
- la figure 9 est une vue en perspective d'une partie de la collerette illustrée sur la figure 8,
- la figure 10 est une vue de face d'une partie d'une collerette selon une autre variante de l'invention.

Sur la figure 5, on a représenté en coupe la zone de jonction entre un premier conduit d'une entrée d'air 42 et un second conduit d'une motorisation 44 d'une nacelle d'aéronef les deux conduits étant disposés bout-à-bout. Le plan de coupe contient l'axe longitudinal de la nacelle et l'axe d'un élément de liaison.

Selon un mode de réalisation, le dispositif de liaison entre une motorisation et une entrée d'air comprend au niveau de la motorisation une collerette annulaire 46 s'étendant dans un plan sensiblement perpendiculaire à l'axe longitudinal de la nacelle et comportant une pluralité de trous de passage 48, au niveau de l'entrée d'air une collerette annulaire 50 s'étendant dans un plan sensiblement perpendiculaire à l'axe longitudinal de la nacelle, plaquée contre la collerette annulaire 46 de la motorisation au niveau d'un plan de jonction référencé 52 et comportant une pluralité de trous de passage 54 disposés au droit des trous de passage 48 de la motorisation et des éléments de liaison 56 répartis sur la périphérie des collerettes annulaires 46 et 50 logés dans les trous de passage 48 et 54, les éléments de liaison 56 étant orientés parallèlement à l'axe longitudinal de la nacelle.

Selon les cas, une collerette annulaire peut être réalisée d'un seul tenant avec la motorisation ou l'entrée d'air ou se présenter sous la forme d'une bride reliée à la motorisation ou l'entrée d'air.

Chaque élément de liaison 56 comprend une tige 58 sous forme d'un cylindre avec à une première extrémité un premier appui 60 susceptible d'être plaqué contre la face libre d'une des collerettes, à l'occurrence la collerette annulaire 50 de l'entrée d'air, et à l'autre extrémité un second appui 62 susceptible d'être plaqué contre la face libre de l'autre collerette, à l'occurrence la collerette annulaire 46 de la motorisation.

Selon un mode de réalisation, un élément de liaison 56 peut se présenter sous la forme d'un boulon, avec d'une part une vis comportant une tige avec à une première extrémité une tête (correspondant au premier appui 60) et à l'autre extrémité un filetage, et d'autre part un écrou (correspondant au second appui 62) se vissant à l'extrémité de la vis.

En variante, l'élément de liaison peut se présenter sous la forme d'un rivet avec une tige comportant à une première extrémité une tête formant un premier appui et dont l'autre extrémité est déformée de manière à former le second appui.

Avantageusement, l'élément de liaison 56 comprend un fourreau déformable 64 qui peut être enfilé sur la tige 58 et interposé entre l'une des collerettes et l'un des appuis. Selon l'exemple illustré, le fourreau déformable 64 est intercalé entre la collerette annulaire 46 de la motorisation et l'appui 62 formé par un écrou de l'élément de liaison. Ce fourreau déformable 64 a un diamètre intérieur ajusté à celui de la tige 58 et comprend en partie centrale une épaisseur relativement faible de manière à pouvoir se déformer, notamment par flambage. Cet agencement permet d'augmenter l'énergie absorbée par déformation du dispositif de liaison et ainsi de limiter la propagation des déformations orientées selon la direction axiale.

L'invention propose un dispositif de liaison permettant d'absorber par déformation plastique et élastique une partie de l'énergie produite lors du choc de la pale contre le conduit de la motorisation et de limiter la propagation des déformations entre le conduit de la motorisation et le conduit de l'entrée d'air.

Chaque collerette annulaire 46, 50 comprend une zone de jonction 66, 68 la reliant directement à la motorisation ou à l'entrée d'air ou à un conduit 70 (visible sur la figure 5) lui-même relié au conduit de la motorisation ou au conduit de l'entrée d'air.

Selon l'invention, au moins une collerette, de préférence la collerette 50 de l'entrée d'air, comprend au moins une lumière 72 intercalée entre un trou de passage 54 et la zone de jonction 68 ou entre un trou de passage 54 et le bord extérieur 74 de la collerette.

Avantageusement, pour chaque trou de passage 54, une lumière 72 est prévue soit entre le trou de passage 54 et la zone de jonction 68 ou entre le trou de passage 54 et le bord extérieur 74 de la collerette.

Cette lumière 72 a des formes adaptées pour réduire la résistance à la flexion F par rapport au profil de l'art antérieur illustré sur la figure 4A.

Avantageusement, pour un trou de passage donné, la lumière 72 est symétrique par rapport à un plan médian P contenant l'axe longitudinal de la nacelle et l'axe du trou de passage.

De préférence, la lumière 72 a une forme en U ou en V avec des branches disposées de part et d'autre du trou de passage 54.

Selon un mode de réalisation, la lumière 72 comprend d'une part une partie centrale 76 délimitée par deux bords 78, 78' parallèles sensiblement perpendiculaires au plan P et disposés de part et d'autre du plan P de manière symétrique, et d'autre part, deux lobes 80, 80' disposés de part et d'autre de la partie centrale 76, de manière symétrique par rapport au plan P.

Selon une première variante illustrée sur les figures 5 à 7, pour un trou de passage 54 donné, la lumière 72 est disposée entre le trou de passage et la zone de jonction 68.

De préférence, le bord 78 inférieur de la lumière 72 est tangent à la surface extérieure du conduit auquel est reliée la collerette.

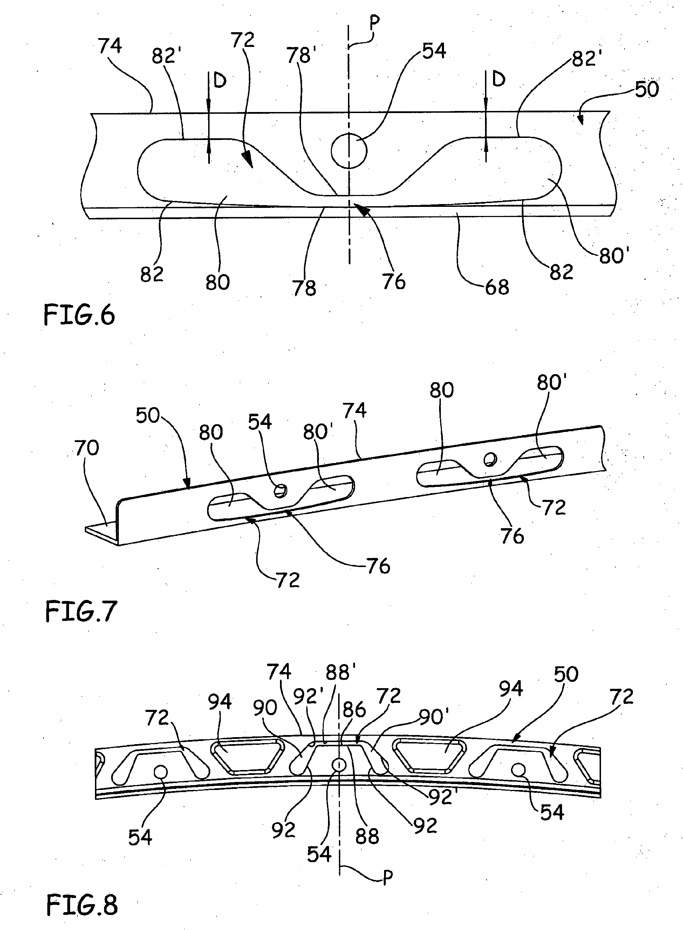

Selon cette variante, comme illustré en détails sur la figure 6, la lumière 72 comprend une partie centrale 76 dont les bords 78, 78' sont parallèles et espacés d'une distance de l'ordre de 4 à 10 mm. Les deux lobes 80, 80' de la lumière sont délimités par deux bords 82, 82' qui prolongent respectivement les bords 78, 78' et dont l'espacement augmente progressivement en s'éloignant du plan médian P, les deux bords formant un angle de l'ordre de 40° puis est sensiblement contant sur une distance de l'ordre de 2 à 4 cm puis diminue, les deux bords 82, 82' se rejoignant en suivant un arc de cercle.

Pour assurer une réduction de la flexion F, le bord 82' de chaque lobe se rapproche du bord extérieur 74 de la collerette, la distance D le séparant dudit bord étant sensiblement identique à celle séparant le trou de passage du bord 78' de la partie centrale 76.

La distance entre le trou de passage 54 et les bords 78' et 82' et la distance D entre le bord 82' et le bord extérieur 74 doivent être suffisantes pour garantir la reprise des efforts entre les éléments de liaison 56 et la zone de jonction 68.

La distance entre deux lumières 72 consécutives et les distance entre la lumière 72 et le trou de passage 54 et/ou le bord extérieur 74 de la collerette doivent être suffisantes pour garantir une résistance à la torsion élevée, comparable à celle de l'art antérieur.

En parallèle, la distance D entre la lumière 72 et le bord extérieur 74 doit être inférieure à un certain seuil pour permettre à la collerette de se déformer, notamment en flexion et autoriser un mouvement relatif entre les conduits de l'entrée d'air et de la motorisation.

Avantageusement, la distance D doit avoir une valeur comprise entre 20 et 40% de la hauteur de la collerette.

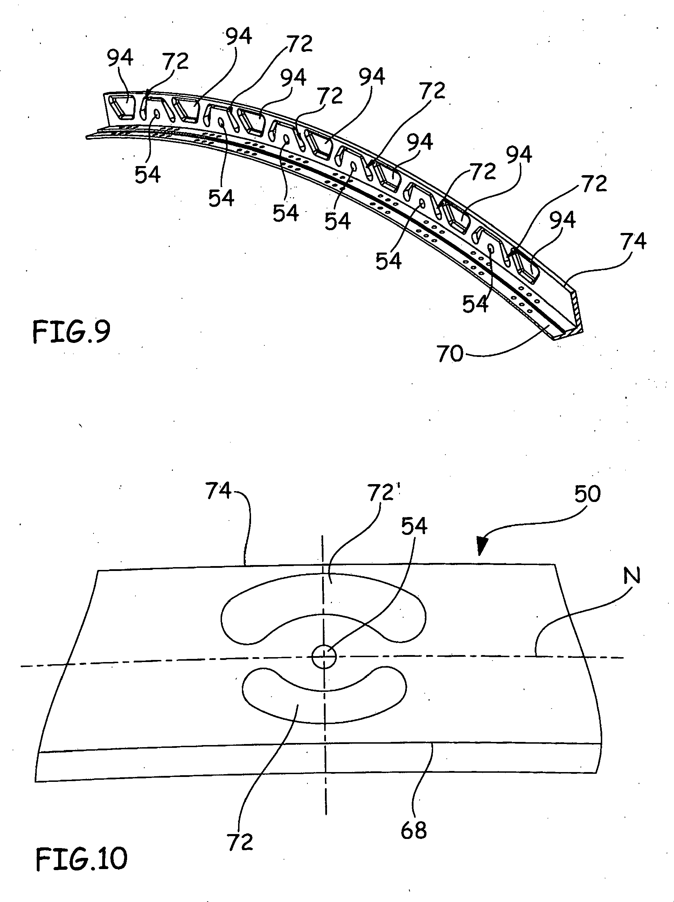

Selon une autre variante illustrée sur les figures 8 et 9, pour un trou de passage 54 donné, la lumière 72 est disposée entre le trou de passage et le bord extérieur 74 de la collerette.

Selon cette variante, comme illustré en détails sur la figure 8, la lumière 72 comprend une partie centrale 86 dont les bords 88, 88' sont parallèles et espacés d'une distance de l'ordre de 4 à 10 mm. Les deux lobes 90, 90' de la lumière sont délimités par deux bords 92, 92' qui prolongent respectivement les bords 88, 88' et dont l'espacement augmente progressivement en s'éloignant du plan médian P, puis diminue, les deux bords 92, 92' se rejoignant en suivant un arc de cercle.

Pour assurer une réduction de la flexion F, le bord 92 de chaque lobe se rapproche de la zone de jonction 68. Avantageusement, le bord 92 de chaque lobe est tangent à la surface extérieure du conduit auquel est reliée la collerette.

La distance entre le bord 92' et le bord extérieur 74 doit être suffisante pour garantir une résistance à la torsion élevée, comparable à celle de l'art antérieur. Selon une autre caractéristique de l'invention, la collerette peut comprendre des lumières secondaires 94 intercalées entre les lumières 72 principales. Les lumières principales et secondaires sont disposées de manière alternée.

Dans ce cas, les lumières 72 principales et les lumières secondaires 94 ont des formes qui permettent d'obtenir entre elles une forme en treillis. Cette configuration visible sur les figures 8 et 9 permet de réduire la masse de la collerette tout en conservant une résistance à la torsion élevée comparable à celle procuré par une collerette de l'art antérieur telle qu'illustrée sur la figure 4A.

Avantageusement, la distance séparant les lumières 72 et 94 et la distance séparant les lumières 72, 94 du bord extérieur 74 de la collerette sont sensiblement égales à D, et ont une valeur comprise entre 20 et 40% de la hauteur de la collerette.

Selon une autre variante illustrée sur la figure 10, la collerette 50 de l'entrée d'air comprend une lumière 72 intercalée entre un trou de passage 54 et la zone de jonction 68 et une lumière 72' entre un trou de passage 54 et le bord extérieur 74 de la collerette. Cette solution permet de préserver la continuité de la fibre neutre N. Selon les cas, les formes des lumières 72, 72' peuvent être sensiblement identiques ou non. De préférence, les lumières 72, 72' sont symétriques par rapport à un plan médian contenant l'axe longitudinal de la nacelle et l'axe du trou de passage.

## Revendications

1. Nacelle d'aéronef avec un dispositif de liaison entre un premier conduit d'une entrée d'air (42) et un second conduit d'une motorisation (44), les deux conduits étant disposés bout à bout, ledit dispositif de liaison comportant une collerette annulaire (50) reliée à l'entrée d'air, une collerette annulaire (46) reliée à la motorisation plaquée contre la collerette annulaire (50) de l'entrée d'air, une pluralité de trous de passage (48, 54) ménagés dans les collerettes annulaires (46, 50) et disposés au droit les uns des autres et des éléments de liaison (56) logés dans les trous de passage (48, 54), permettant de relier lesdites collerettes annulaires (46, 50), au moins une collerette comprend au moins une lumière (72) intercalée entre un trou de passage (54) et la zone de jonction (68) de la collerette et/ou entre un trou de passage (54) et le bord extérieur (74) de la collerette, **caractérisée en ce que** lesdites collerettes s'étendant dans un plan perpendiculaire à l'axe longitudinal de la nacelle.

2. Nacelle d'aéronef selon la revendication 1, **caractérisée en ce que** pour un trou de passage donné, la ou les lumière(s) (72) est(sont) symétrique(s) par rapport à un plan médian contenant l'axe longitudinal de la nacelle et l'axe du trou de passage.

3. Nacelle d'aéronef selon la revendication 2, **caractérisée en ce que** la lumière (72) a une forme en U ou en V avec des branches disposées de part et d'autre du trou de passage (54).

4. Nacelle d'aéronef selon la revendication 3, **caractérisée en ce que** la lumière (72) comprend une partie centrale (76, 86) dont les bords (78, 78', 88, 88') sont parallèles, deux lobes (80, 80', 90, 90') délimités par deux bords (82, 82', 92, 92') qui prolongent respectivement les bords (78, 78', 88, 88') de la partie centrale (76, 86) et dont l'espacement augmente progressivement en s'éloignant du plan médian P, puis diminue, les deux bords (82, 82', 92, 92') se rejoignant en suivant un arc de cercle.

5. Nacelle d'aéronef selon l'une quelconque des revendications précédentes, **caractérisée en ce que** pour un trou de passage (54) donné, la lumière (72) est disposée entre le trou de passage et la zone de jonction (68).

6. Nacelle d'aéronef selon la revendication 5, **caractérisée en ce que**, le bord (78) inférieur de la lumière (72) est tangent à la surface extérieure du conduit auquel est reliée la collerette.

7. Nacelle d'aéronef selon la revendication 5 ou 6, **caractérisée en ce que** la distance entre la lumière (72) et le bord extérieur (74) a une valeur comprise entre 20 et 40% de la hauteur de la collerette.

8. Nacelle d'aéronef selon l'une quelconque des revendications 1 à 4, **caractérisée en ce que** pour un trou de passage (54) donné, la lumière (72) est disposée entre le trou de passage et le bord extérieur (74) de la collerette.

9. Nacelle d'aéronef selon la revendication 8, **caractérisée en ce que** le bord (92) de chaque lobe est tangent à la surface extérieure du conduit auquel est reliée la collerette.

10. Nacelle d'aéronef selon l'une quelconque des revendications 1 à 4, **caractérisée en ce que** pour un trou de passage (54) donné, une lumière (72) est disposée entre le trou de passage et la zone de jonction (68) et une lumière (72') est disposée entre le trou de passage et le bord extérieur (74) de la collerette.

11. Nacelle d'aéronef selon l'une quelconque des revendications précédentes, **caractérisée en ce qu'**au moins une des collerettes comprend des lumières (72) principales intercalées entre les trous de passage (54) et la zone de jonction (68) de la collerette et/ou entre les trous de passage (54) et le bord extérieur (74) de la collerette ainsi que des lumières secondaires (94) intercalées entre les lumières principales (72).

12. Nacelle d'aéronef selon la revendication 11, **caractérisée en ce que** les lumières (72) principales et les lumières secondaires (94) ont des formes qui permettent d'obtenir entre elles une forme en treillis.

## Patentansprüche

1. Gondel eines Luftfahrzeugs mit einer Verbindungsvorrichtung zwischen einem ersten Kanal eines Lufteinlasses (42) und einem zweiten Kanal einer Motorisierung (44), wobei die beiden Kanäle aneinandergefügt sind und die Verbindungsvorrichtung einen mit dem Lufteinlass verbundenen ringförmigen Flansch (50) aufweist, einen mit der Motorisierung verbundenen und gegen den ringförmigen Flansch (50) des Lufteinlasses angesetzten ringförmigen Flansch (46), eine Vielzahl von Durchführungslöchern (48, 54), die in den ringförmigen Flanschen (46, 50) ausgebildet und einander gegenüberliegend angeordnet sind, und Verbindungsmittel (56) aufweist, die sich in den Durchführungslöchern (48, 54) befinden und eine Verbindung der ringförmigen Flansche (46, 50) gestatten, wobei wenigstens ein Flansch, wenigstens eine Öffnung (72) aufweist, die sich zwischen einem Durchführungsloch (54) und einem Verbindungsbereich (68) des Flansches und/oder zwischen einem Verbindungsloch (54) und dem äußeren Rand (74) des Flansches befindet, **dadurch gekennzeichnet, dass** sich die Flansche in einer Ebene erstrecken, die im rechten Winkel zur Längsachse der Gondel ausgerichtet ist.

2. Gondel eines Luftfahrzeugs nach Anspruch 1, **dadurch gekennzeichnet, dass** für ein gegebenes Durchführungsloch die Öffnung(en) (72) symmetrisch bezüglich einer Medianebene ist(sind), die die Längsachse der Gondel und die Achse des Durchführungslochs enthält.

3. Gondel eines Luftfahrzeugs nach Anspruch 2, **dadurch gekennzeichnet, dass** die Öffnung (72) U- oder V-förmig ausgebildet ist, mit beidseits des Durchführungslochs (54) angeordneten Verzweigungen.

4. Gondel eines Luftfahrzeugs nach Anspruch 3, **dadurch gekennzeichnet, dass** die Öffnung (72) einen zentralen Abschnitt (76, 86) aufweist, dessen Ränder (78, 78', 88, 88') parallel verlaufen, und zwei Ausbuchtungen (80, 80', 90, 90'), die von zwei Rändern (82, 82', 92, 92') begrenzt sind, die jeweils die Ränder (78, 78', 88, 88') des zentralen Abschnitts (76, 86) verlängern und deren Abstand sich mit zunehmender Entfernung von der medianen Ebene P zunehmend vergrößert und dann verringert, wobei die beiden Ränder (82, 82', 92, 92') sich einem Kreisbogen folgend vereinen.

5. Gondel eines Luftfahrzeugs nach einem der vorhergehenden Ansprüche, **dadurch gekennzeichnet, dass** für eine gegebene Lochdurchführung (54) die Öffnung (72) zwischen dem Durchführungsloch und dem Verbindungsbereich (68) angeordnet ist.

6. Gondel eines Luftfahrzeugs nach Anspruch 5, **dadurch gekennzeichnet, dass** der untere Rand (78) der Öffnung (72) eine Tangente zu der äußeren Oberfläche des Kanals bildet, mit dem der Flansch verbunden ist.

7. Gondel eines Luftfahrzeugs nach Anspruch 5 oder 6, **dadurch gekennzeichnet, dass** der Abstand zwischen der Öffnung (72) und dem äußeren Rand (74) einen Wert zwischen 20 und 40 % der Höhe des Flansches hat.

8. Gondel eines Luftfahrzeugs nach einem der Ansprüche 1 bis 4, **dadurch gekennzeichnet, dass** für ein gegebenes Durchführungsloch (54) die Öffnung (72) zwischen dem Durchführungsloch und dem äußeren Rand (74) des Flansches angeordnet ist.

9. Gondel eines Luftfahrzeugs nach Anspruch 8, **dadurch gekennzeichnet, dass** der Rand (92) von jeder Ausbuchtung eine Tangente zu der äußeren Oberfläche des Kanals bildet, mit dem der Flansch verbunden ist.

10. Gondel eines Luftfahrzeugs nach einem der Ansprüche 1 bis 4, **dadurch gekennzeichnet, dass** für ein gegebenes Durchführungsloch (54) eine Öffnung (72) zwischen dem Durchführungsloch und dem Verbindungsbereich (68) angeordnet ist und dass eine Öffnung (72') zwischen dem Durchführungsloch und dem äußeren Rand (74) des Flansches angeordnet ist.

11. Gondel eines Luftfahrzeugs nach einem der vorhergehenden Ansprüche, **dadurch gekennzeichnet, dass** wenigstens einer der Flansche Hauptöffnungen (72) aufweist, die sich zwischen den Durchführungslöchern (54) und dem Verbindungsbereich (68) des Flansches befinden und/oder zwischen den Durchführungslöchern (54) und dem äußeren Rand (74) des Flansches, ebenso wie sekundäre Öffnungen (94), die sich zwischen den Hauptöffnungen (72) befinden.

12. Gondel eines Luftfahrzeugs nach Anspruch 11, **dadurch gekennzeichnet, dass** die Hauptöffnungen (72) und die sekundären Öffnungen (94) Formen haben, die es gestatten, zwischen ihnen eine Netzwerkform auszubilden.

## Claims

1. Aircraft nacelle with a connecting device between a first conduit of an air inlet (42) and a second conduit of a motor (44), both conduits being arranged end-to-end, said connecting device comprising an annular flange (50) connected to the air inlet and an annular flange (46) connected to the motor pressed against the air inlet annular flange (50); a plurality of bolt holes (48, 54) formed in the annular flanges (46, 50) and arranged plumb to each other; and a plurality of connecting elements (56) disposed in the plurality of bolt holes (48,54), for connecting said annular flanges (46, 50); at least one flange comprises at least one opening (72) interposed between a bolt hole (54) and a junction zone (68) of the flange and/or between a bolt hole (54) and an outer edge (74) of the flange, **characterized in that** said flanges extending in a plane perpendicular to the longitudinal axis of the nacelle.

2. Aircraft nacelle according to claim 1, wherein for a given bolt hole, the at least one opening (72) is symmetrical in relation to a median plane containing the longitudinal axis of the nacelle and the axis of the bolt hole.

3. Aircraft nacelle according to claim 2, wherein the opening (72) is U- or V-shaped with branches arranged on either side of the bolt hole (54).

4. Aircraft nacelle according to claim 3, wherein the opening (72) comprises a central portion (76, 86) whose edges (78, 78', 88, 88') are parallel, and two lobes (80, 80', 90, 90') delimited by two edges (82, 82', 92, 92') which respectively prolong edges (78, 78', 88,88') of central portion (76, 86), and whose spacing increases progressively going away from median plane P and then decreases, both edges (82, 82', 92, 92') following an arc of a circle.

5. Aircraft nacelle according to any one of the preceding claims, wherein, for a given bolt hole (54), the opening (72) is arranged between the bolt hole and the junction zone (68).

6. Aircraft nacelle according to claim 5, wherein the lower edge (78) of the opening (72) is tangent to the outer surface of the conduit which is connected to the flange.

7. Aircraft nacelle according to claim 5 or 6, wherein the distance between the opening (72) and the outer edge (74) has a value between 20 and 40% of the height of the flange.

8. Aircraft nacelle according to claims 1 to 4, wherein, for a given bolt hole (54), the opening (72) is arranged between the bolt hole and the outer edge (74) of the flange.

9. Aircraft nacelle according to claim 8, wherein the edge (92) of each lobe is tangent to the outer surface of the conduit which is connected to the flange.

10. Aircraft nacelle according to claims 1 to 4, wherein, for a given bolt hole (54), an opening (72) is arranged between the bolt hole and the junction zone (68) and an opening (72') is arranged between the bolt hole and the outer edge (74) of the flange.

11. Aircraft nacelle according to any one preceding claims, wherein at least one of the flanges includes primary openings (72) interposed between bolt holes (54) and the junction zone (68) of the flange, and/or between bolt holes (54) and the outer edge (74) of the flange, as well as secondary openings (94) interposed between the primary openings (72).

12. Aircraft nacelle according to claim 11, wherein the primary openings (72) and the secondary openings (94) have shapes which enable them to form a lattice.
